# EUROPEAN PATENT APPLICATION

(11) **EP 4 622 227 A1**
(43) Date of publication of application: **24.09.2025**
(21) Application number: 25155680.9
(22) Date of filing: 03.02.2025
(51) Int. Cl.: H04L 69/22, H04L 69/321, H04L 69/328

(54) **METHOD AND SYSTEM FOR AIR/GROUND DATA TRANSPORT**

(30) Priority: 18.03.2024 US 202418608008
(71) Applicant: The Boeing Company, Arlington, VA 22202 (US)
(72) Inventor: AYYAGARI, Arun, Arlington, 22202 (US); ANSTEY, Jack William, Arlington, 22202 (US); ANSTEY, Timothy W., Arlington, 22202 (US); APANOVITCH, Jason, Arlington, 22202 (US)
(74) Representative: Plasseraud IP

(57) **Abstract**

System and method for air/ground data transport (AGDT) is provided. The system includes an Application Layer, a Session/Transport Layer, a QUIC/TLS Layer, a User Datagram Protocol (UDP) Layer, an Internet Protocol (IP) Layer, and an Internet Protocol (IP) Layer. If the data is small, the Session/Transport Layer selects MQTT transport protocol for control plane communication. If the data is large, the Session/Transport Layer selects rsync /SSH protocol for data plane communication.

## Description

### BACKGROUND

### 1. Field:

The disclosure relates generally to data communication, and more specifically to a method and system for air/ground data transport.

### 2. Description of the Related Art:

Existing networking infrastructures that facilitate connection between aircraft and ground systems include Wi-Fi, cellular, and satellite communication. However, these networking infrastructures share common limitations, including packet loss during data transmission, significant delay, restricted bandwidth, and challenging environmental conditions necessitating frequent network disruptions and switching.

Presently, communication between aircraft and ground systems relies generally on file transfers, applicable to all types and sizes of data. This poses challenges when using Wi-Fi, cellular, and satellite communication, as bandwidth constraints lead to slow data transfer rates. The asymmetry in bandwidth, with ground systems often having five times more available bandwidth than aircraft, exacerbates the problem. Moreover, the inherent instability of network connections due to the dynamic nature of aircraft movement, whether in active flight, on the tarmac, or encountering obstacles, contributes to slow packet transfers or dropped packets.

File and data transfers, reliant on TCP/IP protocols, further suffer from slow network switching and inefficient usage of the already limited environment. Collectively, these performance limitations significantly impede file and data transfers between aircraft and ground systems.

### SUMMARY

An illustrative embodiment provides an air/ground data transport (AGDT) system for data transmission. The system includes an Application Layer configured to receive data and present the data in a format suitable for further processing by subsequent layers. The system includes a Session/Transport Layer configured to receive data from the Application Layer and select a protocol for data transmission based on data size and add headers and control information specific to the selected protocol to the data. The selected protocol comprises: MQTT responsive to a determination that the data is small; or rsync/SSH responsive to a determination that the data is large. The system includes a QUIC/TLS Layer configured to receive processed data from the Session/Transport Layer and manage a User Datagram Protocol (UDP) Layer and an Internet Protocol (IP) Layer. The UDP Layer is configured to add headers and control information specific to source and destination port numbers, length information and a checksum to the data. The IP Layer is configured to add source and destination IP addresses to the data. The system includes a LINK/PHY (Physical) Layer configured to receive processed data from the QUIC/TLS Layer and add headers and control information specific to MAC addresses, frame type, and error-checking information to the data. The LINK/PHY Layer is configured to convert the data into electrical signals.

In an illustrative embodiment, the data is small if the data does not require segmentation and reassembly, and the data is large if the data requires segmentation and reassembly.

In an illustrative embodiment, the QUIC Layer operates over UDP and adds the headers and control information for reduced latency and improved congestion control. The TLS Layer adds the headers and control information to provide encryption, authentication, and integrity of the data.

In an illustrative embodiment, the LINK/PHY Layer comprises a transceiver configured to convert the data into the electrical signals. The Link/PHY Layer is coupled to an antenna configured to convert the electrical signals into radio signals for transmission over the airwaves.

In an illustrative embodiment, an air/ground data transport (AGDT) system for data reception includes a LINK/PHY (Physical) Layer configured to receive data and extract and decode headers and control information specific to MAC addresses, frame type, and error-checking information from the data. The system includes a QUIC/TLS Layer configured to receive processed data from the LINK/PHY Layer and manage a User Datagram Protocol (UDP) Layer and an Internet Protocol (IP) Layer. The IP Layer is configured to extract and decode headers and control information specific to source and destination IP addresses from the data. The UDP Layer is configured to extract and decode headers and control information specific to source and destination port numbers, length information, and a checksum from the data. The system includes a Session/Transport Layer configured to receive processed data from the QUIC/TLS Layer and extract and decode headers and control information specific to a selected protocol during a transmission phase from the data. The system includes an Application Layer configured to receive processed data from the Session/Transport Layer and present the data in a format suitable for an end-user application.

In an illustrative embodiment, a method for air/ground data transport includes receiving data at an Application Layer and presenting the received data in a format suitable for further processing. The method includes determining by a Session/Transport layer a protocol for data transmission and adding headers and control information specific to the protocol to the data. The MQTT protocol is selected if the data is small and the rsync/SSH protocol is selected if the data is large. The method includes receiving by a QUIC/TLS Layer processed data from the Session/Transport Layer. The QUIC/TLS Layer is configured to manage a UDP Layer and an IP Layer. The UDP Layer is configured to add headers and control information specific to source and destination port numbers, length information, and a checksum to the data. The IP Layer is configured to add headers and control information specific to source and destination IP addresses to the data. The method includes adding by a Link/PHY Layer headers and control information specific to MAC addresses, frame type, and error-checking information to the data.

In an illustrative embodiment, a method for air/ground data transport includes receiving data at a LINK/PHY Layer from the airwaves and extracting and decoding by the LINK/PHY Layer headers and control information specific to MAC addresses, frame type, and error-checking information from the data. The method includes receiving by a QUIC/TLS Layer processed data from the LINK/PHY Layer. The QUIC/TLS Layer is configured to manage a User Datagram Protocol (UDP) Layer and an Internet Protocol (IP) Layer. The IP Layer is configured to extract and decode headers and control information specific to source and destination IP addresses from the data, and the UDP Layer is configured to extract and decode headers and control information specific to source and destination port numbers, length information, and a checksum from the data. The method includes receiving processed data at a Session/Transport Layer from the QUIC/TLS Layer and selecting a protocol for processing the data by the Session/Transport Layer. The MQTT protocol is selected if the data is small and the rsync/SSH protocol is selected if the data is large. The method includes receiving processed data at an Application Layer from the Session/Transport Layer and presenting the data in a format suitable for an end-user application.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
FIG. 1 illustrates a network of data processing system in which illustrative embodiments may be implemented;
FIG. 2 is a block diagram of system for air/ground data transport (AGDT) in accordance with an illustrative embodiment;
FIG. 3 illustrates a communication stack of AGDT in accordance with an illustrative embodiment;
FIGS. 4 and 5 are state machine diagrams illustrating various states data can exist during transmission and reception phases, respectively.
FIG. 6 illustrates the processing of large data sets with rsync by various layers of AGDT during the transmission and reception phases; and
FIG. 7 illustrates the processing of a small data with MQTT by various layers of AGDT during the transmission and reception phases.

### DETAILED DESCRIPTION

The illustrative embodiments provide a method and a system for air/ground data transport (AGDT). The AGDT is designed to facilitate secure, robust, and efficient bi-directional data transfers between aircrafts and ground-based systems. The AGDT addresses and mitigates the limitations of current data transfer by optimizing the existing networking infrastructure connecting aircrafts and ground systems.

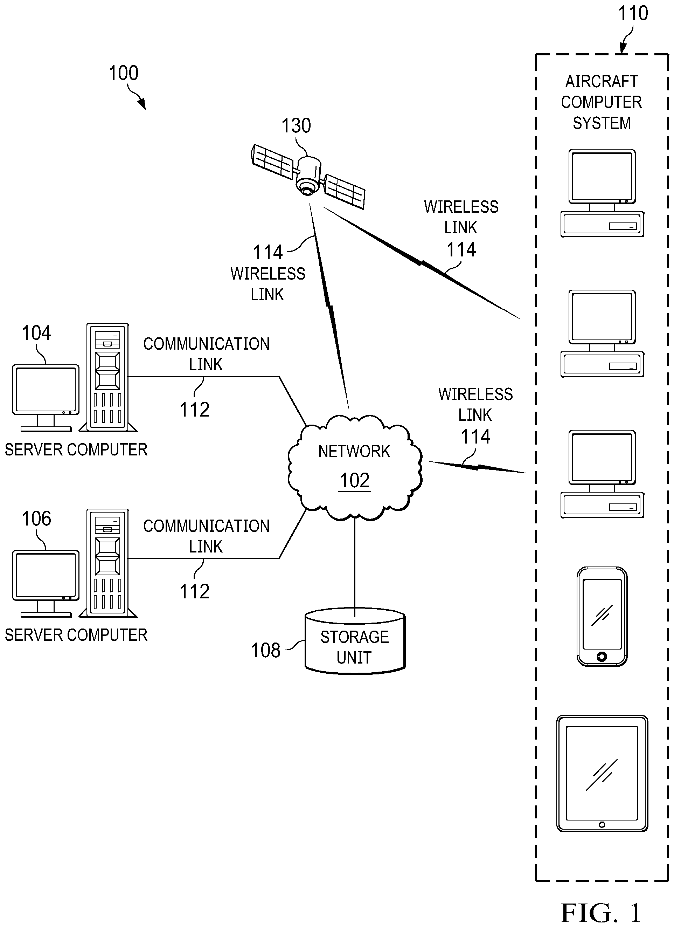

With reference to FIG. 1, a pictorial representation of a network of data processing system is depicted in which illustrative embodiments may be implemented. Network data processing system 100 is a network of computers in which the illustrative embodiments may be implemented. System 100 may be utilized to facilitate air/ground data transport.

System 100 contains network 102, which is the medium used to provide communications links between various devices and computers connected within network data processing system 100. Network 102 may include connections, such as wire, wireless communication links, fiber optic cables or coaxial cables.

In the depicted example, server computers 104 and 106 and storage unit 108 connect to network 102 via communication link 112 which may include wire, fiber optic cables, coaxial cables and wireless links. Server computers 104 and 106 and storage unit 108 may be based in a ground-based system. Also, aircraft computer system 110 connect to network 102 via wireless link 114. Aircraft computer system 110 connect may also connect to network 102 via satellite 130 and wireless link 114. Aircraft computer system 110 includes computers, tablets and other computing devices.

In the illustrative example of FIG. 1, server computers 104 and 106, storage unit 108, and aircraft computer system 110 are network devices that connect to network 102 in which network 102 is the communications media for these network devices.

Program code located in network data processing system 100 can be stored on a computer-recordable storage medium and downloaded to a data processing system or other device for use. For example, the program code can be stored on a computer-recordable storage medium on server computers 104 and 106 and storage unit 108. Also, the program code can be stored in aircraft computer system 110.

In the illustrative example of FIG. 1, network 102 can be the Internet representing a worldwide collection of networks and gateways that use the Transmission Control Protocol/Internet Protocol (TCP/IP) suite of protocols to communicate with one another. network data processing system 100 also may be implemented using different types of networks. For example, network 102 can be comprised an intranet, a local area network (LAN), a metropolitan area network (MAN), a wide area network (WAN) or a telephone switched network. FIG. 1 is intended as an example, and not as an architectural limitation for the different illustrative embodiments.

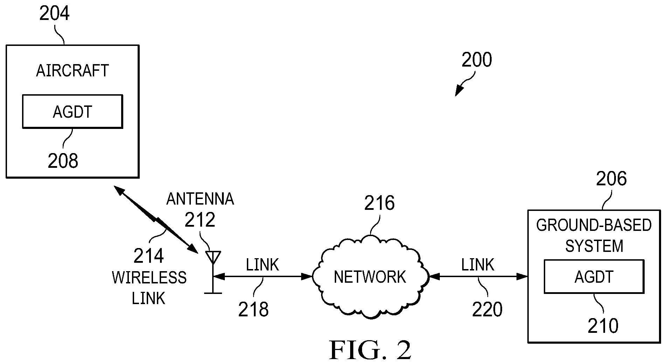

FIG. 2 is a block diagram of system 200 for air/ground data transport between aircraft 204 and ground-based system 206 in accordance with an illustrative embodiment. Aircraft 204 includes air/ground data transport (AGDT) 208, and ground-based system 206 includes AGDT 210. AGDT 208 and AGDT 210 are designed to facilitate bi-directional data transfers between aircraft 204 and ground-based system 206.

As described in detail below, end-user applications generate data which is processed and transmitted by AGDT 208 to ground-based system 206. AGDT 208 processes data received from ground-based system 206. Similarly, AGDT 210 transmits data to aircraft 204 and processes data received from aircraft 204.

System 200 includes ground-based antenna 212 which bidirectionally communicates with aircraft 204 over wireless link 214. In a transmitting mode, antenna 212 converts electrical or optical signals received from network 216 into radio signals that propagate through airwaves and is received by aircraft 204. In a receiving mode, antenna 212 converts radio signals transmitted by aircraft 204 into electrical or optical signals which are then transmitted to network 216 over communication link 218.

Network 216 facilitates bi-directional communication between antenna 212 and ground-based system 206. Network 216 transmits electrical or optical signals to antenna 212 over communication link 218 and receives electrical or optical signals from antenna 212 over communication link 218. Similarly, network 216 receives electrical or optical signals from ground-based system 206 over communication link 220 and transmits electrical or optical signals to ground-based system 206 over communication link 220.

Network 216, for example, can be the Internet, a telephone switched network, an intranet, a local area network (LAN), a metropolitan area network (MAN), a wide area network (WAN) or any other telecommunication infrastructure that facilitates data communication between antenna 212 and network 216. Communication links 218 and 220 are physical links that allow antenna 212, network 216 and ground-based system 206 to exchange data. Communication links 218 and 220 can take various forms, including wired connections like wired lines, fiber-optic cables, coaxial cables and ethernet cables.

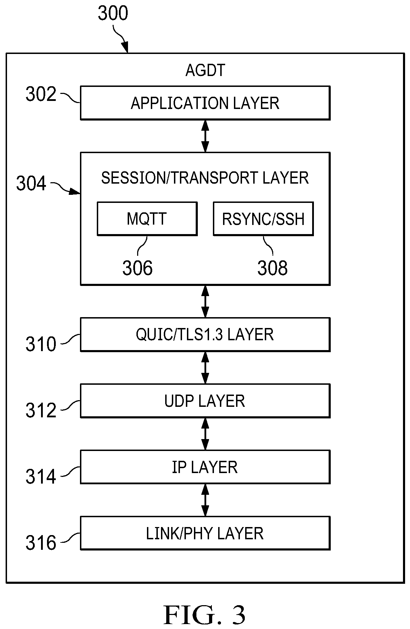

FIG. 3 illustrates a communication stack of AGDT 300 in accordance with an illustrative embodiment. The communication stack comprises different layers. During transmission and reception phases, data undergoes processing through the different layers, with each layer serving a specific function in ensuring secure, efficient, and reliable communication between aircraft 204 and ground-based system 206. The selection of protocols and the use of specific layers contribute to optimizing data transfer in various scenarios within the aviation communication environment.

AGDT 300 can be configured as AGDT 208 which is installed in aircraft 204. Also, AGDT 300 can be configured as AGDT 210 which is installed in ground-based system 206.

During the transmission phase, the process begins when end-user applications provide data to Application Layer 302. The end-user applications may include word processors, web browsers, email clients, databases or storage devices. The data may include text data, numeric data, image data, video data, audio data, binary data, telemetry data and geospatial data.

Application Layer 302 serves as the interface between end-user applications and the rest of the communication stack of AGDT 300. Application Layer 302 presents the raw data in a format that the next layer of the stack can understand. At this stage, no specific headers or trailers are added to data packets. In some example embodiments, Application Layer 302 is implemented in software.

The data from Application Layer 302 is handed over to Session/Transport layer 304. In Session/Transport Layer 304, a decision is made on which protocol to use for data transmission, depending on the size of the data. If the data is small and does not require to be segmented, MQTT (Message Queue Telemetry Transport) protocol 306 is chosen, which serves as the control plane for communication. Such data may include short messages containing a designated gate number for an aircraft or a baggage claim number for passengers. MQTT is a lightweight, publish-subscribe messaging protocol designed for efficient communication between devices. MQTT is suited for scenarios with low bandwidth, high latency, or unreliable networks. At this stage, headers and control information specific to MQTT protocol are added to the data packets.

If the data is large and thereby requires segmentation and reassembly, rsync/SSH protocol 308 is chosen, which serves as the data plane. Rsync (Remote Synchronization) is a file synchronization and transfer protocol that efficiently transmits and updates files between devices. Rsync minimizes data transfer by sending only the differences (delta) between source and destination files. SSH (Secure Shell) is a cryptographic network protocol that provides a secure channel over an unsecured network. When combined with rsync, SSH ensures secure communication during file synchronization and transfer. At this stage, headers and control information specific to rsync and SSH protocols are added to the data packets. In some example embodiments, Session/Transport Layer 304 is implemented in software and in other embodiments Session/Transport Layer 308 is implemented in hardware.

Once the Session/Transport Layer 304 determines the protocol to use, the data is passed to QUIC/TLS1.3 Layer 310, either natively or via a proxy layer between MQTT and QUIC and, SSH. QUIC, is responsible for providing a secure and optimized transport channel for data transmission. QUIC (Quick UDP Internet Connections) is a transport layer protocol designed to provide optimized and secure alternative to traditional TCP. QUIC operates over User Datagram Protocol (UDP), combined offering benefits such as reduced latency, improved congestion control, and seamless network switching. TLS1.3 (Transport Layer Security) is a cryptographic protocol that ensures secure communication over a computer network. TLS1.3 provides encryption and authentication of data during transmission. QUIC adds headers and control information specific for reducing latency and improving congestion control. TLS1.3 adds headers and control information specific to encryption, authentication, and integrity information to the data packets. In some example embodiments, QUIC/TLS1.3 Layer 310 is implemented in software.

In some example embodiments QUIC/TLS 1.3 Layer 310 is configured to receive processed data from the Session/Transport Layer and manage a User Datagram Protocol (UDP) Layer 312 and an Internet Protocol (IP) Layer 314. UDP Layer 312 is a connectionless transport layer protocol that provides faster but less reliable data transmission compared to TCP. UDP Layer 312 is chosen for its efficiency and speed, making it suitable for scenarios where real-time communication is crucial. UDP Layer 312 adds headers and control information specific to source and destination port numbers, length information, and a checksum for error detection. IP Layer 314 adds headers and control information specific to source and destination IP addresses, version, time-to-live (TTL), and protocol type to the data. IP Layer 314 ensures that the data packets are appropriately addressed and directed to their intended destination.

The processed data is handed to LINK/PHY (Physical) Layer 316, which handles the physical transmission of the data. The LINK/PHY Layer 316 adds headers and control information specific to MAC addresses, frame type, and error-checking to the data. LINK/PHY Layer 316 includes a transceiver (not shown in FIG. 3) which converts digital signals into electrical signals. At this stage, modulation and coding techniques are applied to the digital signals. The transceiver may be coupled to an antenna (not shown in FIG. 3) which converts the electrical signals into radio signals for transmission over the airwaves.

During the reception phase, the process begins with the reception of radio signals containing data. The antenna converts the radio signals into electrical signals which are then converted into digital signals by the transceiver. At this stage, the transceiver may perform demodulation and decoding to convert the electrical signals into digital data. The demodulation process involves extracting the original digital bits from the received radio signals.

The processed data from LINK/PHY Layer 316 is received by QUIC/TLS Layer 310. QUIC/TLS Layer 310 is configured to manage User Datagram Protocol (UDP) Layer 312 and Internet Protocol (IP) Layer 314. IP Layer 314 is configured to extract and decode headers and control information specific to source and destination IP addresses from the data. UDP Layer 312 is configured to extract and decode headers and control information specific to source and destination port numbers, length information, and a checksum from the data.

Next, the data moves up to Session/Transport Layer 304, either natively or via a proxy layer between QUIC and MQTT and QUIC and SSH. At this stage, the protocol used for data transfer (MQTT or rsync/SSH) is determined based on extracted protocol specific information in the received data, such as headers and control information.

Once the protocol is determined, the data is passed up to Application Layer 302. If rsync/SSH protocol 308 is chosen, rsync/SSH protocol handles securely transferring and synchronizing files, extracting the original files from the received data. If MQTT protocol is selected, Application Layer 304 processes the data using the publish-subscribe model, extracting the payload of the message.

Application Layer 302 presents the data in a format that an end-user application can understand. At this stage, the data is fully decoded and interpreted based on the end-user application's requirements. This can involve converting binary data into a readable format, such as text, images, or any other type of information.

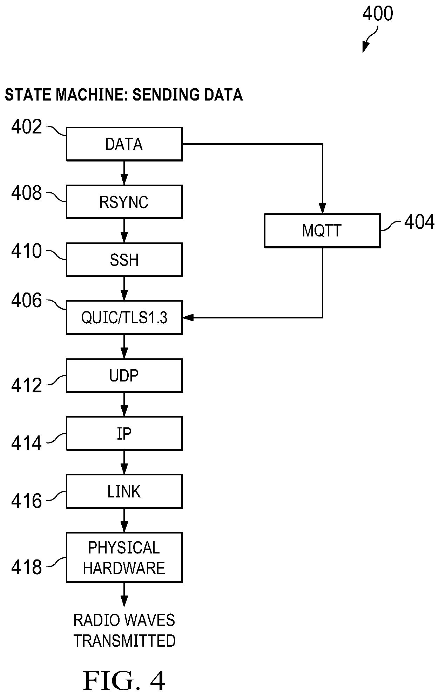

FIG. 4 is state machine diagram 400 illustrating various states that data can exist in and transitions between these states during a transmission phase. In some embodiments, a state machine is implemented using software, hardware, firmware and other technologies such as field-programmable gate arrays (FPGAs) and programmable logic controllers (PLCs).

Initially, the data is in state 402. At this state, the data may reside in an Application Layer. If the data is small and does not require segmentation, the data is transitioned to state 404 for processing using MQTT protocol. Such data may include short messages containing a designated gate number for an aircraft or a baggage claim number for passengers. MQTT is a lightweight, publish-subscribe messaging protocol designed for efficient communication between devices. MQTT is well-suited for scenarios with low bandwidth, high latency, or unreliable networks. At this stage, headers and control information specific to MQTT protocol are added to the data packets. After processing using MQTT protocol, the data is transitioned to state 406 for processing using QUIC/TLS1.3 protocol.

If the data is large and requires segmentation and reassembly, the data is transitioned to state 408 for processing using rsync protocol. rsync is a file synchronization and transfer protocol that efficiently transmits and updates files between devices. Rsync minimizes data transfer by sending only the differences (delta) between source and destination files. At this stage, headers and control information specific to rsync protocol are added to the data packets.

After processing using rsync protocol, the data is transitioned to state 410 for processing using SSH protocol. SSH is a cryptographic network protocol that provides a secure channel over an unsecured network. At this stage, headers and control information specific to SSH protocol are added to the data packets. When combined with rsync, SSH ensures secure communication during file synchronization and transfer. After processing using SSH protocol, the data is transitioned to state 406 for processing using QUIC/TLS1.3 protocol.

QUIC/TLS1.3 provides a secure and optimized transport channel for data transmission. QUIC is a transport layer protocol designed to provide optimized and secure alternative to traditional TCP. TLS1.3 is a cryptographic protocol that ensures secure communication over a computer network. TLS1.3 provides encryption and authentication of data during transmission. QUIC adds headers to the data packets for reduced latency and improved congestion control. TLS1.3 adds encryption, authentication, and integrity information to the data packets.

After processing using QUIC/TLS1.3 protocol, the data is transitioned to state 412 for processing using UDP protocol. UDP is a connectionless transport protocol that provides faster but less reliable data transmission compared to TCP. UDP protocol is chosen for its efficiency and speed, making it suitable for scenarios where real-time communication is crucial. At this stage, headers and control information specific to source and destination port numbers, length information, and a checksum are added to the data packets.

The processed data is transitioned to state 414 for processing using Internet Protocol. Internet Protocol ensures that data packets are appropriately addressed and directed to their intended destination. At this stage, headers and control information specific to source and destination IP addresses, version, time-to-live (TTL), and protocol type are added to the data packets.

The data processed using Internet Protocol is then transitioned to state 416 for LINK layer processing. Link layer provides reliable and error-free communication between directly connected devices over a local network. At this stage, headers and control information specific to MAC addresses, frame type, and error-checking are added to the data packets.

The data processed by LINK layer is transitioned to state 418 for processing by PHY layer. PHY layer deals with the physical transmission of data. PHY layer converts digital data into electrical signals which are transmitted as radio signals over the airwaves.

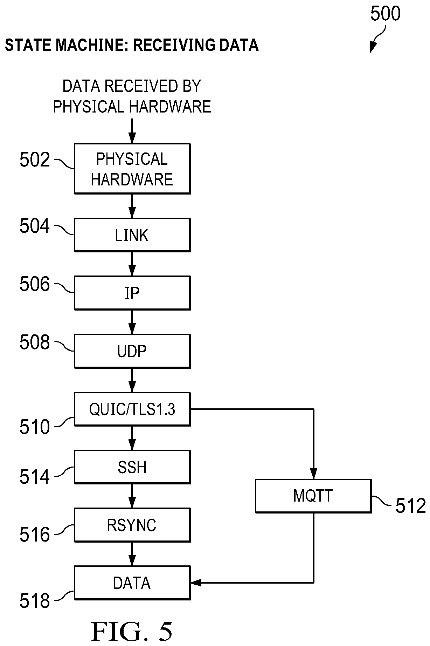

FIG. 5 is state machine diagram 500 illustrating various states data can exist in and transitions between these states during a reception phase. In some embodiments, a state machine is implemented using software, hardware, firmware and other technologies such as field-programmable gate arrays (FPGAs) and programmable logic controllers (PLCs).

In state 502, radio signals containing data are received and converted into electrical signals by a physical hardware. The physical hardware may include an antenna coupled to a transceiver. The antenna receives and converts the radio signals into electrical signals which are then converted by the transceiver into digital signals (e.g., data). The transceiver may perform demodulation and decoding to convert the electrical signals into digital data.

The data packets are then transitioned to state 504 for processing by a Link Layer which extracts headers and control information specific to source and destination MAC addresses, frame type and other control information from the data packets. The Link Layer retrieves the payload or data portion from the data packets. The Link Layer also performs error checking to ensure the integrity of the data packets by detecting any transmission errors.

Next, the data transitions to state 506 for processing by an IP Layer. At this stage, headers and control information specific to source and destination IP addresses, version, time-to-live (TTL), and protocol type are extracted and decoded from the data packets.

Next, the data transitions to state 508 for processing by a UDP Layer. At this stage, headers and control information specific to source and destination port numbers are extracted and decoded from the data packets, and the UDP checksum is verified for data integrity, ensuring that the data has not been corrupted during transmission.

Next, the data transitions to state 510 for processing by QUIC/TLS1.3 Layer 310 for decryption. At this stage, headers and control information is decrypted along with the original data. TLS1.3 handles decryption and verifies the integrity of the data. The result is the extraction of the original data in its unencrypted form.

If the data was processed using MQTT protocol during the transmission phase, the data transitions to state 512 for processing by MQTT. At this stage, the data is processed using the publish-subscribe model, extracting the payload and the data is reconstructed to its original form. The reconstructed data is transitioned to state 518.

If the data was processed using rsync/SSH protocol during the transmission phase, the data is transitioned from state 510 to state 514. At this stage, the data is processed using SSH protocol that provides a secure channel over an unsecured network.

Next, the data is transitioned to state 516 for synchronizing using rsync protocol. rsync minimizes data transfer by extracting only the differences between source and destination files and the files are synchronized. The data is reconstructed to its original form and the reconstructed data is transitioned to state 518.

AGDT 300 addresses and overcomes the drawbacks associated with existing communication systems between aircraft and ground systems. Unlike existing systems that rely on traditional file transfers using TCP/IP protocols, AGDT 300 introduces a dynamic approach which decides which protocol to use based on the size of the data to be transmitted. For small-sized data, AGDT 300 employs the MQTT protocol which is designed for efficient communication in scenarios with low bandwidth, high latency, or unreliable networks. By using MQTT for short messages, such as gate numbers for aircraft or baggage claim numbers for passengers, AGDT 300 ensures quick and reliable communication without the need for heavy file transfer protocols.

In some example embodiments, control plane messages are typically small that require none to minimal segmentation and reassembly and such messages are transmitted over MQTT. For example, for small data (e.g., less than 20 MB), MQTT is selected since the data can be transmitted with minimal segmentation and reassembly.

In instances where large data sets require segmentation and reassembly, AGDT 300 utilizes the rsync/SSH protocol combination. rsync is a file synchronization and transfer protocol known for its efficiency in transmitting only the differences between source and destination files, reducing data transfer requirements. The integration of SSH ensures secure communication during the file synchronization and transfer process, addressing concerns related to the security of transmitted data.

AGDT 300 addresses the bandwidth asymmetry between aircraft and ground systems by intelligently choosing protocols. This prevents overloading the network with unnecessary data and optimizes the usage of available bandwidth, enhancing overall data transfer efficiency. The inherent instability of network connections due to the dynamic nature of aircraft movement is addressed by AGDT 300. The use of MQTT and rsync/SSH, designed for scenarios with unreliable networks, ensures adaptability to varying network conditions, reducing the likelihood of slow packet transfers or dropped packets.

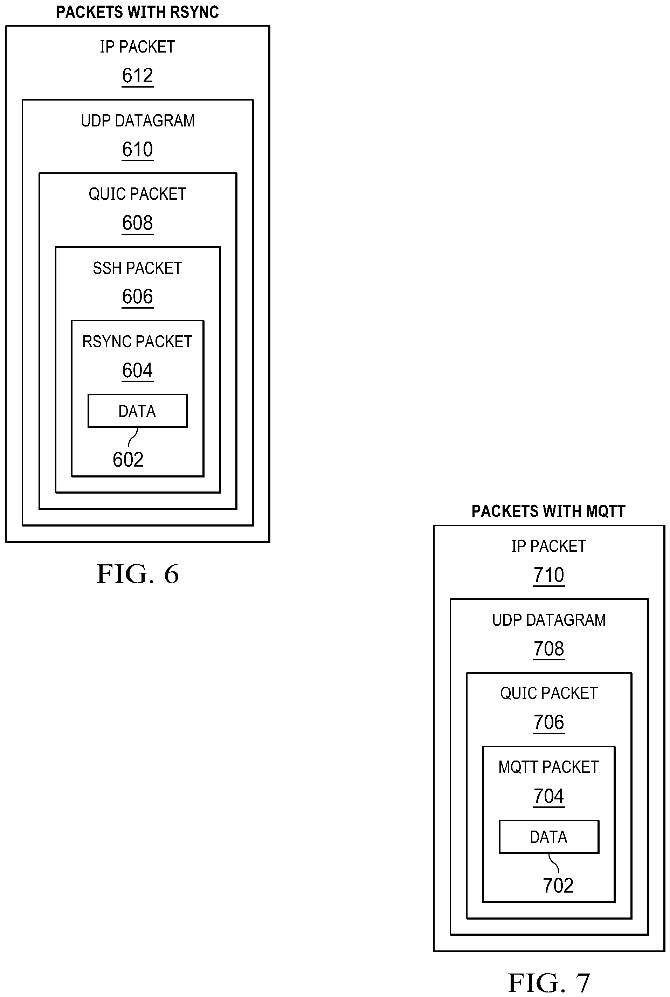

FIG. 6 illustrates the processing of large data sets with rsync by various layers of AGDT 300 during the transmission and reception phases. During the transmission phase, data 602 is processed and encapsulated by the rsync Layer into rsync packet 604. The SSH Layer processes and encapsulates rsync packet 604 into SSH packet 606. The QUIC Layer processes and encapsulates SSH packet 606 into QUIC packet 608. The UDP Layer processes and encapsulates QUIC packet 608 into UDP packet 610. Finally, the IP Layer processes and encapsulates UDP packet 610 into IP packet 612.

During the reception phase, the IP Layer extracts the IP header from IP packet 612 and provides UDP packet 610 to the UDP Layer. Next, the UDP Layer decodes the UDP header from UDP packet 610 and provides QUIC packet 608 to the SSH Layer.

Next, the SSH Layer processes QUIC packet 608 to provide a secure channel and provides rsync packet 606 to the rsync Layer. The rsync Layer synchronizes and reassembles rsync packet 604 into original data 602.

FIG. 7 illustrates the processing of a small data with MQTT by various layers of AGDT 300 during the transmission and reception phases. During the transmission phase, data 702 is processed and encapsulated by the MQTT Layer into MQTT packet 704. Next, the QUIC Layer processes and encapsulates MQTT packet 704 into QUIC packet 706. Next, the UDP Layer processes and encapsulates QUIC packet 706 into UDP packet 708. Finally, the IP Layer processes and encapsulates UDP packet 708 into IP packet 710.

During the reception phase, the IP Layer extracts the IP header from IP packet 710 and provides UDP packet 708 to the UDP Layer. Next, the UDP Layer decodes the UDP header from UDP packet 708 and provides QUIC packet 706 to the QUIC Layer. Next, the QUIC Layer processes QUIC packet 706 and provides MQTT packet 704 to the MQTT Layer which then reassembles the data packet into original data 702.

As used herein, the phrase "a number" means one or more. The phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component. Many modifications and variations will be apparent to those of ordinary skill in the art. Further, different illustrative embodiments may provide different features as compared to other desirable embodiments.

The embodiment or embodiments selected are chosen and described in order to best explain the principles of the embodiments, the practical application, and to enable others of ordinary skill in the art to understand the disclosure for various embodiments with various modifications as are suited to the particular use contemplated.

Also provided are the following illustrative, non-exhaustive examples of the subject-matter encompassed herein, which relate to:

An air/ground data transport (AGDT) system for data transmission, comprising: an Application Layer configured to receive data and present the data in a format suitable for further processing by subsequent layers; a Session/Transport Layer configured to receive data from the Application Layer and select a protocol for data transmission based on data size and add headers and control information specific to the selected protocol to the data, wherein the selected protocol comprises: MQTT responsive to a determination that the data is small; or rsync/SSH responsive to a determination that the data is large; a QUIC/TLS Layer configured receive processed data from the Session/Transport Layer and manage a User Datagram Protocol (UDP) Layer and an Internet Protocol (IP) Layer, wherein the UDP Layer is configured to add headers and control information specific to source and destination port numbers, length information and a checksum to the data, and wherein the IP Layer is configured to add source and destination IP addresses to the data; and a LINK/PHY (Physical) Layer configured to receive processed data from the QUIC/TLS Layer and add headers and control information specific to MAC addresses, frame type, and error-checking information to the data, wherein the LINK/PHY Layer is configured to convert the data into electrical signals.

The system described in the immediately preceding paragraph, wherein the data is small if the data does not require segmentation and reassembly.

The system described in the first one of the two immediately preceding paragraphs, wherein the data is large if the data requires segmentation and reassembly.

The system described in the first one of the three immediately preceding paragraphs, wherein the QUIC Layer operates over UDP and adds the headers and control information for reduced latency and improved congestion control, and wherein and the TLS Layer adds the headers and control information to provide encryption, authentication, and integrity of the data.

The system described in the first one of the four immediately preceding paragraphs, wherein the LINK/PHY Layer comprises a transceiver configured to convert the data into the electrical signals.

The system described in the immediately preceding paragraph, wherein the Link/PHY Layer is coupled to an antenna configured to convert the electrical signals into radio signals for transmission over the airwaves.

An air/ground data transport (AGDT) system for data reception, comprising: a LINK/PHY (Physical) Layer configured to receive data and extract and decode headers and control information specific to MAC addresses, frame type, and error-checking information from the data; a QUIC/TLS Layer configured to receive processed data from the LINK/PHY Layer and manage a User Datagram Protocol (UDP) Layer and an Internet Protocol (IP) Layer, wherein the IP Layer is configured to extract and decode headers and control information specific to source and destination IP addresses from the data, and wherein the UDP Layer is configured to extract and decode headers and control information specific to source and destination port numbers, length information, and a checksum from the data; a Session/Transport Layer configured to receive processed data from the QUIC/TLS Layer and extract and decode headers and control information specific to a selected protocol during a transmission phase from the data; and an Application Layer configured to receive processed data from the Session/Transport Layer and present the data in a format suitable for an end-user application.

The system described in the immediately preceding paragraph, wherein the Session/Transport Layer selects MQTT protocol to extract and decode if the data is small, and wherein the Session/Transport Layer selects rsync/SSH protocol to extract and decode if the data is large.

The system described in the first one of the two immediately preceding paragraphs, wherein the TLS is configured to decrypt and authenticate the data to check the integrity of the data during a transmission phase.

The system described in the first one of the three immediately preceding paragraphs, wherein the LINK/PHY Layer is coupled to an antenna configured to receive radio signals over the airwaves and convert the radio signals into electrical signals.

The system described in the immediately preceding paragraph, wherein the Link/PHY Layer comprises a transceiver configured to receive the electrical signals from the antenna and convert the electrical signals into the data for processing by the LINK/PHY Layer.

A method for air/ground data transmission, comprising the steps of: receiving data at an Application Layer and presenting the received data in a format suitable for further processing; determining by a Session/Transport layer a protocol for data transmission and adding headers and control information specific to the protocol to the data, wherein MQTT protocol is selected if the data is small and rsync/SSH protocol is selected if the data is large; receiving by a QUIC/TLS Layer processed data from the Session/Transport Layer, wherein the QUIC/TLS Layer is configured to manage a UDP Layer and an IP Layer, wherein the UDP Layer is configured to add headers and control information specific to source and destination port numbers, length information, and a checksum to the data and wherein the IP Layer is configured to add headers and control information specific to source and destination IP addresses to the data; and adding by a Link/PHY Layer headers and control information specific to MAC addresses, frame type, and error-checking information to the data.

The method described in the immediately preceding paragraph, further comprising converting the data into electrical signals by a transceiver in the LINK/PHY Layer.

The method described in the immediately preceding paragraph, wherein the Application Layer receives the data from an end-user application.

The method described in the first one of the three immediately preceding paragraphs, wherein MQTT protocol acts as a control plane for the small data, and wherein rsync/SSH protocol acts as a data plane for the large data requiring segmentation and reassembly.

The method described in the first one of the four immediately preceding paragraphs, wherein the data is small if the data does not require segmentation and reassembly, and wherein the data is large if the data requires segmentation and reassembly.

A method for air/ground data reception, comprising: receiving data at a LINK/PHY Layer from the airwaves and extracting and decoding by the LINK/PHY Layer headers and control information specific to MAC addresses, frame type, and error-checking information from the data; receiving by a QUIC/TLS Layer processed data from the LINK/PHY Layer, wherein the QUIC/TLS Layer is configured to manage a User Datagram Protocol (UDP) Layer and an Internet Protocol (IP) Layer, wherein the IP Layer is configured to extract and decode headers and control information specific to source and destination IP addresses from the data, and wherein the UDP Layer is configured to extract and decode headers and control information specific to source and destination port numbers, length information, and a checksum from the data; receiving processed data at a Session/Transport Layer from the QUIC/TLS Layer and selecting a protocol for processing the data by the Session/Transport Layer, wherein MQTT protocol is selected if the data is small and rsync/SSH protocol is selected if the data is large; and receiving processed data at an Application Layer from the Session/Transport Layer and presenting the data in a format suitable for an end-user application.

The method described in the immediately preceding paragraph, wherein the data is small if the data does not require segmentation and reassembly, and wherein the data is large if the data requires segmentation and reassembly.

The method described in the first one of the two immediately preceding paragraphs, further comprising: receiving radio signals over the airwaves by an antenna coupled to the LINK/PHY Layer; and converting by the antenna the radio signals into electrical signals.

## Claims

1. An air/ground data transport, AGDT, system for data transmission, comprising:
an Application Layer configured to receive data and present the data in a format suitable for further processing by subsequent layers;
a Session/Transport Layer configured to receive data from the Application Layer and select a protocol for data transmission based on data size and add headers and control information specific to the selected protocol to the data, wherein the selected protocol comprises:
Message Queue Telemetry Transport, MQTT, responsive to a determination that the data is small; or
rsync/Secure Shell, SSH, responsive to a determination that the data is large;
a Quick UDP Internet Connections, QUIC,/ Transport Layer Security, TLS, Layer configured receive processed data from the Session/Transport Layer and manage a User Datagram Protocol, UDP, Layer and an Internet Protocol, IP, Layer, wherein the UDP Layer is configured to add headers and control information specific to source and destination port numbers, length information and a checksum to the data, and wherein the IP Layer is configured to add source and destination IP addresses to the data; and
a Link/Physical, PHY, Layer configured to receive processed data from the QUIC/TLS Layer and add headers and control information specific to Medium Access Control, MAC, addresses, frame type, and error-checking information to the data, wherein the LINK/PHY Layer is configured to convert the data into electrical signals.

2. The system of claim 1, wherein the data is small if the data does not require segmentation and reassembly, and wherein the data is large if the data requires segmentation and reassembly.

3. The system of claim 1, wherein the QUIC Layer operates over UDP and adds the headers and control information for reduced latency and improved congestion control, and wherein and the TLS Layer adds the headers and control information to provide encryption, authentication, and integrity of the data.

4. The system of claim 1, wherein the LINK/PHY Layer comprises a transceiver configured to convert the data into the electrical signals.

5. The system of claim 4, wherein the Link/PHY Layer is coupled to an antenna configured to convert the electrical signals into radio signals for transmission over the airwaves.

6. An air/ground data transport, AGDT, system for data reception, comprising:
a LINK/Physical, PHY, Layer configured to receive data and extract and decode headers and control information specific to Medium Access Control, MAC, addresses, frame type, and error-checking information from the data;
a Quick UDP Internet Connections, QUIC,/ Transport Layer Security, TLS, Layer configured to receive processed data from the LINK/PHY Layer and manage a User Datagram Protocol, UDP, Layer and an Internet Protocol, IP, Layer, wherein the IP Layer is configured to extract and decode headers and control information specific to source and destination IP addresses from the data, and wherein the UDP Layer is configured to extract and decode headers and control information specific to source and destination port numbers, length information, and a checksum from the data;
a Session/Transport Layer configured to receive processed data from the QUIC/TLS Layer and extract and decode headers and control information specific to a selected protocol during a transmission phase from the data; and
an Application Layer configured to receive processed data from the Session/Transport Layer and present the data in a format suitable for an end-user application.

7. The system of claim 6, wherein the Session/Transport Layer selects Message Queue Telemetry Transport, MQTT, protocol to extract and decode if the data is small, and wherein the Session/Transport Layer selects rsync/ Secure Shell, SSH, protocol to extract and decode if the data is large.

8. The system of claim 6, wherein the TLS is configured to decrypt and authenticate the data to check the integrity of the data during a transmission phase.

9. The system of claim 6, wherein the Link/PHY Layer comprises a transceiver configured to receive the electrical signals from the antenna and convert the electrical signals into the data for processing by the LINK/PHY Layer.

10. A method for air/ground data transmission, comprising:
receiving data at an Application Layer and presenting the received data in a format suitable for further processing;
determining by a Session/Transport layer a protocol for data transmission and adding headers and control information specific to the protocol to the data, wherein Message Queue Telemetry Transport, MQTT, protocol is selected if the data is small and rsync/ Secure Shell, SSH, protocol is selected if the data is large;
receiving by a Quick UDP Internet Connections, QUIC,/ Transport Layer Security, TLS, Layer processed data from the Session/Transport Layer, wherein the QUIC/TLS Layer is configured to manage a User Datagram Protocol, UDP, Layer and an Internet Protocol, IP, Layer, wherein the UDP Layer is configured to add headers and control information specific to source and destination port numbers, length information, and a checksum to the data and wherein the IP Layer is configured to add headers and control information specific to source and destination IP addresses to the data; and
adding by a Link/Physical, PHY, Layer headers and control information specific to Medium Access Control, MAC, addresses, frame type, and error-checking information to the data.

11. The method of claim 10, wherein the Application Layer receives the data from an end-user application.

12. The method of claim 10, wherein MQTT protocol acts as a control plane for the small data, and wherein rsync/SSH protocol acts as a data plane for the large data requiring segmentation and reassembly.

13. The method of claim 10, wherein the data is small if the data does not require segmentation and reassembly, and wherein the data is large if the data requires segmentation and reassembly.

14. A method for air/ground data reception, comprising:
receiving data at a Link/Physical, PHY, Layer from the airwaves and extracting and decoding by the LINK/PHY Layer headers and control information specific to Medium Access Control, MAC, addresses, frame type, and error-checking information from the data;
receiving by a Quick UDP Internet Connections, QUIC,/ Transport Layer Security, TLS, Layer processed data from the LINK/PHY Layer, wherein the QUIC/TLS Layer is configured to manage a User Datagram Protocol, UDP, Layer and an Internet Protocol, IP, Layer, wherein the IP Layer is configured to extract and decode headers and control information specific to source and destination IP addresses from the data, and wherein the UDP Layer is configured to extract and decode headers and control information specific to source and destination port numbers, length information, and a checksum from the data;
receiving processed data at a Session/Transport Layer from the QUIC/TLS Layer and selecting a protocol for processing the data by the Session/Transport Layer, wherein Message Queue Telemetry Transport, MQTT, protocol is selected if the data is small and rsync/Secure Shell, SSH, protocol is selected if the data is large; and
receiving processed data at an Application Layer from the Session/Transport Layer and presenting the data in a format suitable for an end-user application.

15. The method of claim 14, wherein the data is small if the data does not require segmentation and reassembly, and wherein the data is large if the data requires segmentation and reassembly.
